# EUROPÄISCHE PATENTSCHRIFT

(11) **EP 0 714 451 B1**
(45) Veröffentlichungstag und Bekanntmachung des Hinweises auf die Patenterteilung: **17.06.1998**
(21) Anmeldenummer: 94907568.3
(22) Anmeldetag: 14.02.1994
(51) Int. Cl.: C21B 5/00

(54) **VERFAHREN ZUR ENTSORGUNG/VERWERTUNG VON FÜLLMASSEN ENTHALTENDEN GASFLASCHEN**
METHOD FOR THE DISPOSAL/RECYCLING OF GAS CYLINDERS CONTAINING FILLING MATERIAL
PROCEDE D'ELIMINATION/DE RECYCLAGE DE BOUTEILLES A GAZ CONTENANT DES MATIERES DE REMPLISSAGE

(30) Priorität: 25.08.1993 DE 4328610; 27.10.1993 DE 4336707
(43) Veröffentlichungstag der Anmeldung: 05.06.1996
(73) Patentinhaber: Linde Aktiengesellschaft, 65189 Wiesbaden (DE)
(72) Erfinder: SADJINA, Heinz, D-82049 Pullach (DE); BUTSCHEK, Uwe, D-81373 München (DE)
(74) Vertreter: Kasseckert, Rainer
(86) Internationale Anmeldenummer: EP9400415
(87) Internationale Veröffentlichungsnummer: WO9506139

(56) Entgegenhaltungen:
- EP-A- 0 522 331

## Beschreibung

Die Erfindung betrifft ein Verfahren zur Entsorgung und Verwertung von Füllmassen enthaltenden Gasflaschen.

Gasflaschen mit Füllmassen dienen zur Speicherung von instabilen Brenngasen wie Acetylen, Propylen und dergleichen. Eine Füllmasse kann aus einer geschütteten, kieselsteinartigen, u.U. verbackenen Masse oder aus einem baumaterialartigen, monolithischen Block bestehen, wobei in diesen Füllmassen jeweils ein Gitterwerk von Hohlräumen enthalten ist, in dem ein Lösungsmittel, beispielsweise Aceton, für die eigentliche Gasaufnahme und -speicherung eingelagert ist. Im praktischen Einsatz treten neben altersbedingten Aussortierungen von Gasflaschen immer wieder auch Schäden in den Füllmassen solcher Gasflaschen auf, beispielsweise ungünstig große Lücken oder Risse in diesen, die eine vorzeitige Außerbetriebnahme der Flasche erfordern. Insgesamt sind so laufend eine große Zahl von Flaschen einer geeigneten Entsorgung zuzuführen.

Aus der EP 0 522 331 A2 ist ein Verfahren zum Entsorgen von Begleitmaterial (organisch und anorganisch-nichtmetallisch) enthaltenden Fahrzeugen und schrotthaltigen Altgeräten, beispielsweise Waschmaschinen und Kühlschränken, bekannt, gemäß dem besagte Fahrzeuge und Geräte nur zu einem geringen Grad demontiert und von Gefahrstoffen befreit in einen Kupol- oder Hochofen eingegeben werden, wo die Begleitmaterialien als reduzierend wirkende und schlackebildende Stoffe dienen und wo der Eisenanteil der Eingabe wiedergewonnen wird.

Wegen Verunreinigungen in den Füllmassen (z.B. vom Lösungsmittel) und vor allem aufgrund der Tatsache, daß in den monolithischen Füllmassen aus Festigkeitsgründen chemisch extrem stabile Fasern, beispielsweise Asbestfasern oder spezielle Glasfasern, enthalten sind, stellen diese Gasflaschen jedoch ein spezifisch zu entsorgendes Gut dar. Bislang wurden aussortierte Gasflaschen entweder als Ganzes deponiert oder die Flaschen wurden aufwendig - da Stahlmantel und Füllmasse sich häufig nicht ohne weiteres trennen lassen - in Ihre Bestandteile zerlegt und dann der Stahlmantel weiterverarbeitet und lediglich die Füllmasse geeignet deponiert.

Diese Entsorgungsmethoden sind einerseits aus Gründen des ökonomischen Umgangs mit Rohstoffen und andererseits aus Aufwandgründen nachteilig, so daß die daraus resultierende, der Erfindung zugrunde liegende Aufgabenstellung darin bestand, diese Situation bei der Entsorgung von entsprechenden Gasflaschen zu verbessern.

Diese Aufgabe wird erfindungsgemäß dadurch gelöst,
daß die Gasflaschen samt enthaltener Füllmasse in geöffnetem und entspanntem Zustand als ganzes oder lediglichlich in grobe Stücke zerkleinert als Einsatzanteil einem Eisenschmelzofen, insbesondere einem Kupolofen, Hochofen, oder Drehtrommelofen, zugeführt werden.

Die Erfindung beruht auf der Idee, daß sich speziell die mit Füllmassen-Gasflaschen vorliegende Stoffkombination gut zur Anwendung in Eisenschmelzöfen mit Schlackeanfall eignen könnte. Diese Annnahme liegt darin begründet, daß die besagten Gasflaschen einerseits vermutlich günstig zum entsprechenden Produkteisen (Gußeisen, Roheisen, bestimmte Stähle) umsetzbaren Eisenwerkstoff enthalten (nämlich den Stahlmantel), sowie andererseits darin, daß die enthaltenen Füllmassen aller Wahrscheinlichkeit nach ein geeignetes Ausgangsmaterial für die Schlackebildung bei den betreffenden Schmelzprozessen darstellen. Diese Annahmen haben sich, wie seitens der Anmelderin ermittelt wurde, bestätigt, wobei zudem auch die gegebenenfallls in den Füllmassen enthaltenen Faserstoffe, insbes. auch die Asbestfasern, vorteilhaft zu Schlacke umgebildet und in diese eingebunden werden (die Fasern werden aller Wahrscheinlichkeit nach erschmolzen und erstarren im Verbund mit anderen Schlackekomponenten). Damit ist eine äußerst vorteilhafte Entsorgung und auch Verwertung für die besagten Gasflaschen und vergleichbare Gasspeicher gegeben.

Eine besonders vorteilhafte Variante der Erfindung wird in Verbindung mit Kupolöfen erhalten, wobei hier die Gasflaschen in jedem Falle vorab in grobe Stücke zerkleinert werden und diese Stücke dann als Einsatzanteil vorgesehen und als solcher in den Kupolofen eingebracht werden und dort äußerst vorteilhaft sowohl als eisen- als auch als schlackebildendes Material wirken.

In den mit größeren Dimensionen ausgestatteten Hoch- und Drehtrommelöfen (zu letzterem siehe beispw. DE-OS 41 42 401) ist demgegenüber auch das Einbringen ganzer, unzerkleinerter Gasflaschen, welche sich jedoch in geöffnetem, entgastem und eventuell angebohrtem Zustand zu befinden haben, möglich.

Mit Vorteil werden gemäß der Erfindung die Gasflaschen jedoch in grobe Stücke mit einer maximalen äußeren Abmessung von 50 cm, vorzugsweise maximal 30 cm, zerkleinert. Damit ergibt sich einerseits ein gut handhabbares Gut, das andererseits dann ohne Probleme in Schachtöfen, insbesondere in Gußeisen erzeugenenden Kupolöfen, und auch Drehtrommelöfen eingebracht und dort aufgescholzen werden kann. Ferner kann ein Anteil der besagten Gasflaschen oder Gasflaschenstücke am Eisensatz, also an dem Einsatzanteil der aus Eisenmaterial besteht, von bis zu 40 Gew-% vorgesehen werden, vorzugsweise werden jedoch etwa 5 bis 20 Gew-% vom sonst üblichen Eisensatz mit den erfindungsgemäß vorgeschlagenen, bevorzugt zerkleinerten Flaschen aufgefüllt und in den jeweiligen Ofen eingebracht.
Da die erfindungsgemäß eingebrachten Stücke jeweils Teile des Gasflaschenmantels umfassen und dieser aus vergleichsweise wenig Kohlenstoff enthaltendem Stahl (im Vergleich zu Gußeisen) besteht, wird die Erfindung in einer vorteilhaften Variante derart ausgeführt, daß gleichzeitig mit der Zugabe von Gasflaschenstücken die Zugabe von Kohlenstoffspendern erfolgt, wobei insbesondere die pneumatische Zufuhr von geeigneten, staubförmigen, kohlenstoffhaltigen Materialien besonders vorteilhaft zur Herstellung höherer Kohlenstoffgehalte im sich ergebenden Basiseisen ist (siehe hierzu z.B. DE-OS 38 11 166).

Häufig werden die betreffenden Gasflaschen bereits nach deren Aussortierung gezielt entgast oder zeitweilig in geöffnetem Zustand verwahrt, so daß diese bereits dann - oder gegebenenfalls nach einer Zerkleinerung, beispielsweise einer Zersägung quer zur Längsrichtung - gemäß der Erfindung einsatzfähig sind. Das Zerkleinern ist grundsätzlich bevorzugt vor Ort beim Schmelzofen und möglichst abgetrennt von der Umgebung durchzuführen, um so vor allem eine weiträumige Verteilung von Fasermaterial aus den Füllmassen in die Umgebung zu verhindern. Gegebenenfalls sind beim Transport von bereits zerkleinerten Gasflaschen entsprechende Maßnahmen zu ergreifen, beispielsweise eine entsprechende Verpackung oder Versiegelung der Teile vorzusehen, um diesem Umstand zu begegnen. In einer besonders aufwandsgünstigen Variante der Erfindung werden die betreffenden Gasflaschen nach ihrer Aussortierung jedoch weder spezifisch entgast noch gesondert vom gegebenenfalls auch noch vorhandenen Lösungsmittel befreit (die betreffenden Medien stören den Kupolofenbetrieb nicht), sondern werden im gegebenen Zustand zum Verwertungsofen verbracht, dort - falls überhaupt - mit Vorteil mit einer Schlagschere räumlich isoliert zerkleinert und anschließend in den jeweiligen Ofen eingebracht.

Im folgenden wird die Erfindung anhand eines Ausführungsbeispiels näher erläutert: In einer Kupolofenanlage mittlerer Größenordnung werden in der üblichen Betriebsweise z.B. Einsätze mit etwa 1200kg eingebracht, welche im einzelnen aus etwa 1000 kg Eisenmaterial (zB Schrott, Gußbruch etc.),100-110 kg Satzkoks und 40 - 50 kg Kalksteinen sowie einige niedriganteiligen Zuschlagstoffen bestehen. Ebenso erfolgt bei konventioneller Betriebweise bei Bedarf eine Zugabe von schlackebildendem Material, beispielsweise von Kieselsteinen, in einem Umfang von bis zu 50 kg.

Gemäß der Erfindung wir nun demgegenüber beispielsweise ein Einsatz zusammengestellt und regelmäßig zugeführt, der lediglich zu etwa 900 kg aus üblichem Eisenmaterial besteht, darüber hinaus jedoch 50 bis 150 kg, 20-30 cm messende Gasflaschensegmente mit asbestfaserhaltiger Füllmassenfüllung enthält. Im übrigen sind die gleichen Einsatzanteile wie oben vorzusehen, wobei nunmehr allerdings auf das zusätzliche, schlackebildende Material im Regelfall verzichtet werden kann.

Mit diesem Einsatz tritt nun im Vergleich zum üblichen Einsatz keine wesentliche Veränderung im Kupolofenbetrieb und in der Eisenanalyse auf. Es wird ein Gußeisen unveränderter Qualität erzielt, wobei mit den Füllmassenanteilen ein Material in den Kupolofen eingebracht wird , das günstig zur Schlackebildung beiträgt. Es ergibt sich eine hinsichtlich Zusammensetzung und Viskosität im üblichen Rahmen befindliche Schlacke, die - soweit bislang ermittelt werden konnte - kein Fasermaterial enthält. Asbest- oder auch Glasfasern werden demzufolge beim Durchlaufen des Kupolofenschmelzprozesses (s.hierzu beispielsweise DE-A 41 22 381) aufgeschmolzen und erstarren letzlich mit den anderen, bekannten Begleitstoffen zu Schlacke, welche wie üblich beipielsweise als Wegebaugrundstoff weiterverwendet werden kann. Auch mit geschütteten Füllmassen ergeben sich im Prinzip die gleichen Ergebnisse, wobei das Problem der Faserverbleibs hier grundsätzlich nicht vorhanden ist, die anderen, hier gängigerweise auftretenden Materialien sich im Kupolofenprozeß jedoch ebenso günstig verhalten, wie die der monolithischen Füllmassen.

Der erfindungsgemäße Vorschlag ergibt somit eine wesentliche Verbesserung der Entsorgungslage bei mit Füllmassen ausgestatteten Gasflaschen, die sowohl von seiten der Materialverwertung als auch von seiten des Aufwands, des Umweltschutzes und der Arbeitssicherheit Vorteile aufweist.

## Patentansprüche

1. Verfahren zur Entsorgung und/oder Verwertung von mit Füllmassen gefüllten Gasflaschen, **dadurch gekennzeichnet**, daß die Gasflaschen samt enthaltener Füllmasse in entgastem, geöffnetem Zustand als ganzes oder in grobe Stücke zerkleinert als Einsatzanteil einem Eisenschmelzofen, insbesondere einem Kupolofen, Hochofen, oder Drehtrommelofen, zugeführt werden.

2. Verfahren nach Anspruch 1, dadurch gekennzeichnet, daß die Gasflaschen samt enthaltener Füllmasse in grobe Stücke zerkleinert werden und diese Stücke als Einsatzanteil in einen Kupolofen eingebracht werden und dort sowohl als eisen- als auch schlackebildendes Material dienen.

3. Verfahren nach den Ansprüchen 1 oder 2, dadurch gekennzeichnet, daß die Gasflaschen in grobe Stücke mit einer maximalen äußeren Abmessung von 50 cm, vorzugsweise maximal 30 cm, zerkleinert werden.

4. Verfahren nach einem der Ansprüche 1 bis 3, dadurch gekennzeichnet, daß der Anteil der Gasflaschen bzw. Gasflaschenstücke am Eisensatz bis zu 40 Gew-%, vorzugsweise 5 bis 20 Gew-%, beträgt.

5. Verfahren nach einem der Ansprüche 1 bis 4, dadurch gekennzeichnet, daß gleichzeitig mit der Zugabe von Gasflaschen bzw. Gasflaschenstücken die Zugabe von Kohlenstoffspendern erfolgt, insbesondere die pneumatische Zufuhr von geeigneten, staubförmigem, kohlenstoffhaltigem Material durchgeführt wird.

6. Verfahren nach einem der Ansprüche 1 bis 5, dadurch gekennzeichnet, daß die betreffenden Gasflaschen nach ihrer Aussortierung weder spezifisch entgast noch gesondert vom Lösungsmittel befreit werden, sondern im gegebenen Zustand zum Eisenschmelz, ofen verbracht, dort geeignet zerkleinert oder lediglich geöffnet und entspannt und eventuell mit Zusatzöffnungen versehen werden und dann in den Ofen eingebracht werden.

## Claims

1. Method for the disposal and/or recycling of gas cylinders containing filler materials, characterized in that the gas cylinders, together with the filler material contained therein, are fed in the degassed, open state, unbroken or comminuted into coarse pieces, as part of the charge to an iron smelting furnace, in particular a cupola furnace, blast furnace or rotary furnace.

2. Method according to Claim 1, characterized in that the gas cylinders, together with the filler material contained therein, are comminuted into coarse pieces and these pieces are introduced into a cupola furnace as part of the charge, where they serve both as iron-forming material and as slag-forming material.

3. Method according to Claim 1 or 2, characterized in that the gas cylinders are comminuted into coarse pieces with a maximum external dimension of 50 cm, preferably at most 30 cm.

4. Method according to one of Claims 1 to 3, characterized in that the proportion of the iron charge which is made up of the gas cylinders or gas cylinder pieces amounts to up to 40 % by weight, preferably 5 to 20 % by weight.

5. Method according to one of Claims 1 to 4, characterized in that the addition of carbon donors, in particular the pneumatic feed of suitable carbon-containing material in the form of dust, is carried out at the same time as the addition of gas cylinders or gas cylinder pieces.

6. Method according to one of Claims 1 to 5, characterized in that the gas cylinders in question, after they have been sorted out, are neither specifically degassed nor is the solvent separately removed, but rather they are taken to the iron smelting furnace in the state in which they are found, where they are suitably comminuted or merely opened and depressurized, and are optionally provided with additional openings, and are then introduced into the furnace.

## Revendications

1. Procédé pour l'élimination et/ou le recyclage de bouteilles à gaz contenant des matières de remplissage, caractérisé en ce que les bouteilles à gaz et la matière de remplissage qu'elles contiennent, ouvertes et vidées de leur gaz, entières ou fractionnées en morceaux grossiers, sont introduites en tant que charge pour un four pour la fusion du fer, en particulier un cubilot, un haut-fourneau ou un four rotatif à tambour.

2. Procédé selon la revendication 1, caractérisé en ce que les bouteilles à gaz et la matière de remplissage qu'elles contiennent sont fractionnées en morceaux grossiers, et en ce que ces morceaux sont introduits en tant que charge dans un cubilot, où il servent à la fois de matériau de scorification et de sidérurgie.

3. Procédé selon la revendication 1 ou 2, caractérisé en ce que les bouteilles sont fractionnées en morceaux grossiers présentant un dimension extérieure minimale de 50 cm, de préférence au maximum de 30 cm.

4. Procédé selon l'une des revendications 1 à 3, caractérisé en ce que la proportion pondérale des bouteilles à gaz ou des morceaux de bouteilles à gaz représente jusqu'à 40% de la quantité de fer, de préférence de 5 à 20%.

5. Procédé selon l'une des revendications 1 à 4, caractérisé en ce que, simultanément à l'introduction des bouteilles à gaz et/ou des morceaux de bouteilles à gaz, on introduit des dispensateurs de carbone, en particulier par transport pneumatique de matériaux carbonés pulvérulents adéquats.

6. Procédé selon l'une des revendications 1 à 5, caractérisé en ce qu'après leur tri, les bouteilles à gaz ne font pas l'objet d'un dégazage spécifique, ni d'une élimination séparée de solvants, mais sont simplement emportées vers le four pour la fusion du fer dans l'état où elles se trouvent, et y sont préalablement réduites en morceaux ou simplement ouvertes et décomprimées, de manière appropriée, et éventuellement percées d'ouvertures supplémentaires, avant d'être introduites dans le four.
